# EUROPEAN PATENT APPLICATION

(11) **EP 4 137 761 A2**
(43) Date of publication of application: **22.02.2023**
(21) Application number: 22191067.2
(22) Date of filing: 18.08.2022
(51) Int. Cl.: F25D 11/00, F25D 29/00

(54) **TRANSPORT REFRIGERATION UNIT AND METHOD OF OPERATING A TRANSPORT REFRIGERATION UNIT**

(30) Priority: 20.08.2021 US 202163235461 P
(71) Applicant: Carrier Corporation, Palm Beach Gardens, FL 33418 (US)
(72) Inventor: GOPAVARAM, Subhash Reddy, 500081 Telangana (IN)
(74) Representative: Dehns

(57) **Abstract**

A transport refrigeration system (200) including: a transport refrigeration unit (22) configured to refrigerate a refrigerated cargo space (119) within a transport container (106); and a sensor system (300) including one or more sensors (310) configured to detect whether the refrigerated cargo space (119) is empty or free of perishable goods (118), wherein the sensor system (300) is configured to transmit a message (370) to at least one of the transport refrigeration unit (22) or a user device (400), the message (370) indicating that the refrigerated cargo space (119) is empty or free of perishable goods (118), and wherein the transport refrigeration unit (22) is configured to shut off or return to an atmospheric temperature when the refrigerated cargo space (119) is empty or free of perishable goods (118) in response to least one of the message (370) from the sensor system (300) or a command (480) from the user device (400).

## Description

The embodiments herein generally relate to transport refrigeration systems and more specifically, a method and apparatus for energy management of such transport refrigeration systems.

Typically, cold chain distribution systems are used to transport and distribute cargo, or more specifically perishable goods and environmentally sensitive goods (herein referred to as perishable goods) that may be susceptible to temperature, humidity, and other environmental factors. Perishable goods may include but are not limited to fast-moving consumer goods (FMCG), fresh foods, frozen foods, fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated vehicles and trailers are commonly used to transport perishable goods in a cold chain distribution system. A transport refrigeration system is mounted to the vehicles or to the trailer in operative association with a cargo space defined within the vehicles or trailer for maintaining a controlled temperature environment within the cargo space.

Conventionally, transport refrigeration systems used in connection with refrigerated vehicles and refrigerated trailers include a transport refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/ gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

On commercially available transport refrigeration systems used in connection with refrigerated vehicles and refrigerated trailers, the compressor, and typically other components of the transport refrigeration unit, must be powered during transit by a prime mover. In mechanically driven transport refrigeration systems the compressor is driven by the prime mover, either through a direct mechanical coupling or a belt drive, and other components, such as the condenser and evaporator fans are belt driven.

Transport refrigeration systems may also be electrically driven. In an electrically driven transport refrigeration system, a prime mover carried on and considered part of the transport refrigeration system, drives an alternating (AC) synchronous generator that generates AC power. The generated AC power is used to power an electric motor for driving the refrigerant compressor of the transport refrigeration unit and also powering electric AC fan motors for driving the condenser and evaporator motors and electric heaters associated with the evaporator. A more efficient method to power the electric motor is desired to reduce fuel usage.

According to a first aspect of the present invention, a transport refrigeration system is provided. The transport refrigeration system includes: a transport refrigeration unit configured to refrigerate a refrigerated cargo space within a transport container; and a sensor system including one or more sensors configured to detect whether the refrigerated cargo space is empty or free of perishable goods, wherein the sensor system is configured to transmit a message to at least one of the transport refrigeration unit or a user device, the message indicating that the refrigerated cargo space is empty or free of perishable goods, and wherein the transport refrigeration unit is configured to shut off or return to an atmospheric temperature when the refrigerated cargo space is empty or free of perishable goods in response to least one of the message from the sensor system or a command from the user device.

Optionally, the transport refrigeration unit is configured to shut off or return to the atmospheric temperature automatically in response to the message from the sensor system.

Optionally, the transport refrigeration unit is configured to shut off or return to the atmospheric temperature automatically in response to the command from the user device, and wherein the command is generated via an input device of the user device.

Optionally, the user device includes an input device configured to receive a manual input from an operator of the user device, wherein the command is generated based on the manual input, and wherein the transport refrigeration unit is configured to shut off or return to the atmospheric temperature automatically in response to the command from the user device.

Optionally, the one or more sensors are capable of 360 degree vision and/or 360 degree night vision to see an entirety of the refrigerated cargo space.

Optionally, the one or more sensors are organized in an array to see an entirety of the refrigerated cargo space.

Optionally, the one or more sensors include at least one of: a thermal imaging camera, radio frequency 3D imaging sensor, radio frequency scanner, infrared camera, a night vision camera, an image recognition camera, a video camera, or a Light Detection and Ranging (LIDAR) camera.

Optionally, the one or more sensors are configured to see through shipping containers or boxes to determine whether perishable goods are present in the transport container.

Optionally, the transport container includes one or more compartments and wherein each of the one or more compartments includes at least one of the one or more sensors.

Optionally, the transport container includes one or more compartments and wherein each of the one or more sensors are capable of seeing through walls separating compartments to detect whether there are perishable goods in each of the one or more compartments.

According to a second aspect of the present invention, a method of operating a transport refrigeration system is provided. The method includes: refrigerating a refrigerated cargo space of a transport container using a transport refrigeration unit; detecting, using one or more sensors of a sensor system, whether the refrigerated cargo space is empty or free of perishable goods; transmitting, using the sensor system, a message to at least one of the transport refrigeration unit or a user device, the message indicating that the refrigerated cargo space is empty or free of perishable goods; and shutting off the transport refrigeration unit or returning the transport refrigeration unit to an atmospheric temperature using a controller of the transport refrigeration unit when the refrigerated cargo space is empty or free of perishable goods in response to least one of the message from the sensor system or a command from the user device.

Optionally, the method may include that the transport refrigeration unit is configured to shut off or return to the atmospheric temperature automatically in response to the message from the sensor system.

Optionally, the method may include that the transport refrigeration unit is configured to shut off or return to the atmospheric temperature automatically in response to the command from the user device, and wherein the command is generated via an input device of the user device.

Optionally, the method may include receiving, using an input device of the user device, a manual input from an operator of the user device, wherein the command is generated based on the manual input, and wherein the transport refrigeration unit is configured to shut off or return to the atmospheric temperature automatically in response to the command from the user device.

Optionally, the method may include that the one or more sensors are capable of 360 degree vision or 360 degree night vision to see an entirety of the refrigerated cargo space.

Optionally, the method may include that the one or more sensors are organized in an array to see an entirety of the refrigerated cargo space.

Optionally, the method may include that the one or more sensors include a thermal imaging camera, radio frequency 3D imaging sensor, radio frequency scanner, infrared camera, a night vision camera, an image recognition camera, a video camera, or a Light Detection and Ranging (LIDAR) camera.

Optionally, the method may include that the one or more sensors are configured to see through shipping containers or boxes to determine whether perishable goods are present in the transport container.

Optionally, the method may include that the transport container includes one or more compartments and wherein each of the one or more compartments includes at least one of the one or more sensors.

Optionally, the method may include that the transport container includes one or more compartments and wherein each of the one or more sensors are capable of seeing through walls separating compartments to detect whether there are perishable goods in each of the one or more compartments.

Technical effects of embodiments of the present invention include detecting perishable goods within the transport container and then shutting off the transport refrigeration unit or returning the transport refrigeration unit back to the atmospheric temperature if the transport container is empty to conserve fuel and/or electricity.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

A detailed description of one or more embodiments of the invention are presented herein by way of exemplification only and not limitation, with reference to the Figures. The following descriptions should not be considered limiting. With reference to the accompanying drawings, like elements are numbered alike:
FIG. 1 is a schematic illustration of a transport refrigeration system;
FIG. 2 is an enlarged schematic illustration of a transport refrigeration unit of the transport refrigeration system of FIG. 1; and
FIG. 3 is a flow process illustrating a method of operating the transport refrigeration system of FIGS. 1 and 2.

Transport refrigeration systems conventionally utilize refrigeration units to cool perishable goods during transport. Once the perishable goods are delivered, the refrigeration unit may be accidently left on to cool an empty transport container containing no perishable goods, which waste fuel and/or electricity of the transportation unit. The embodiments disclosed here seek to provide a method and an apparatus for detecting perishable goods within the transport container and then shutting off the refrigeration unit or returning the transport refrigeration unit back to an atmospheric temperature if the transport container is empty to conserve fuel and/or electricity. Advantageously, this reduces emissions and greenhouse gases, which helps achieve a sustainable and eco-friendly vehicle

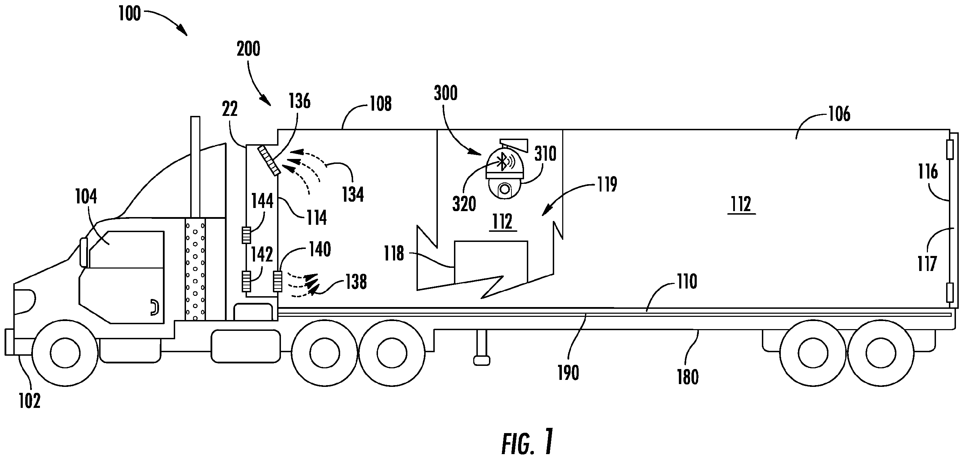

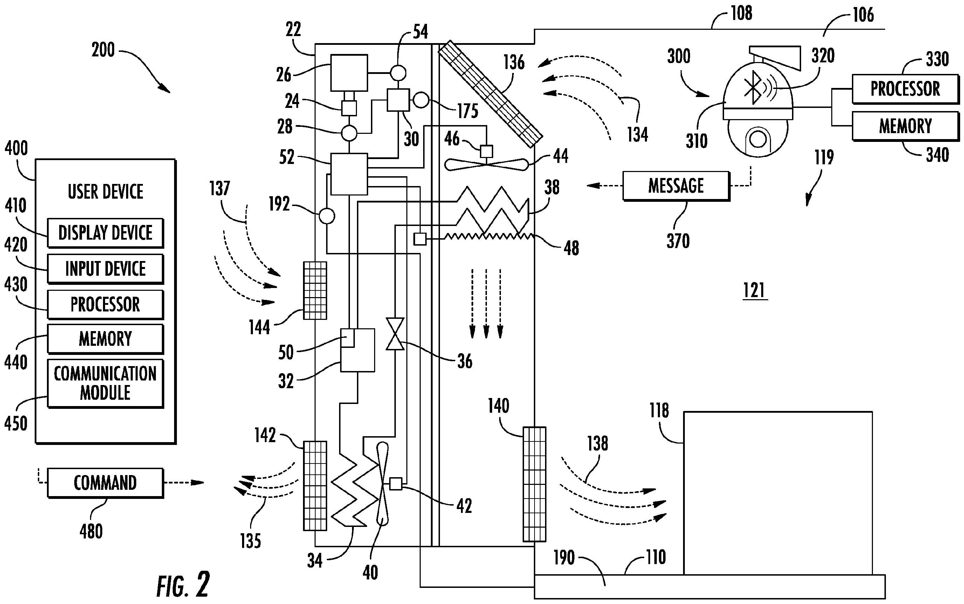

FIG. 1 shows a schematic illustration of a transport refrigeration system 200. FIG. 2 shows an enlarged schematic illustration of the transport refrigeration system 200 of FIG. 1. The transport refrigeration system 200 is being illustrated as a trailer system 100 as seen in FIG. 1. It is appreciated by those of skill in the art that embodiments described herein may be applied to any transport refrigeration system such as, for example shipping containers that are shipped by rail, sea, or any other suitable container, without use of a tractor 102. The trailer system 100 includes a tractor 102 and a refrigerated transport container 106. The tractor 102 includes an operator's compartment or cab 104 and an engine (not shown), which acts as the drive system of the trailer system 100. The refrigerated transport container 106 is coupled or releasably connected to the tractor 102. The refrigerated transport container 106 is a refrigerated trailer and includes a top wall 108, a directly opposed bottom wall 110, opposed side walls 112, and a front wall 114, with the front wall 114 being closest to the tractor 102. The refrigerated transport container 106 further includes a door or doors 117 at a rear wall 116, opposite the front wall 114. The walls of the refrigerated transport container 106 define a refrigerated cargo space 119.

Typically, transport refrigeration systems 200 are used to transport and distribute perishable goods and environmentally sensitive goods (herein referred to as perishable goods 118). The perishable goods 118 may include but are not limited to fast-moving consumer goods (FMCG), fresh foods, frozen foods, fruits, vegetables, grains, beans, nuts, eggs, dairy, seed, flowers, meat, poultry, fish, ice, blood, pharmaceuticals, or any other suitable cargo requiring refrigerated transport. The transport refrigeration system 200 includes a transport refrigeration unit 22, an electric generation device 24, a prime mover 26 for driving the electric generation device 24, and a controller 30. The transport refrigeration unit 22 functions, under the control of the controller 30, to establish and regulate desired environmental parameters such as, for example temperature, pressure, humidity, carbon dioxide, ethylene, ozone, light exposure, vibration exposure, and other conditions in the refrigerated cargo space 119 as known to one of ordinary skill in the art. In an embodiment, the transport refrigeration unit 22 is a refrigeration system capable of providing a desired temperature and humidity range.

The transport refrigeration unit 22 includes a refrigerant compression device 32, a refrigerant heat rejection heat exchanger 34, an expansion device 36, and a refrigerant heat absorption heat exchanger 38 connected in refrigerant flow communication in a closed loop refrigerant circuit and arranged in a conventional refrigeration cycle. The transport refrigeration unit 22 also includes one or more fans 40 associated with the refrigerant heat rejection heat exchanger 34 and driven by fan motor(s) 42 and one or more fans 44 associated with the refrigerant heat absorption heat exchanger 38 and driven by fan motor(s) 46. The transport refrigeration unit 22 may also include a heater 48 associated with the refrigerant heat absorption heat exchanger 38. In an embodiment, the heater 48 may be an electric resistance heater. It is to be understood that other components (not shown) may be incorporated into the refrigerant circuit as desired, including for example, but not limited to, a suction modulation valve, a receiver, a filter/dryer, an economizer circuit.

The refrigerant heat rejection heat exchanger 34 may, for example, comprise one or more refrigerant conveying coiled tubes or one or more tube banks formed of a plurality of refrigerant conveying tubes across flow path to the heat outlet 142. The fan(s) 40 are operative to pass air, typically ambient air, across the tubes of the refrigerant heat rejection heat exchanger 34 to cool refrigerant vapor passing through the tubes. The refrigerant heat rejection heat exchanger 34 may operate either as a refrigerant condenser, such as if the transport refrigeration unit 22 is operating in a subcritical refrigerant cycle or as a refrigerant gas cooler, such as if the transport refrigeration unit 22 is operating in a transcritical cycle.

The refrigerant heat absorption heat exchanger 38 may, for example, also comprise one or more refrigerant conveying coiled tubes or one or more tube banks formed of a plurality of refrigerant conveying tubes extending across flow path from a return air inlet 136. The fan(s) 44 are operative to pass air drawn from the refrigerated cargo space 119 across the tubes of the refrigerant heat absorption heat exchanger 38 to heat and evaporate refrigerant liquid passing through the tubes and cool the air. The air cooled in traversing the refrigerant heat rejection heat exchanger 38 is supplied back to the refrigerated cargo space 119 through a refrigeration unit outlet 140. It is to be understood that the term "air" when used herein with reference to the atmosphere within the cargo box includes mixtures of air with other gases, such as for example, but not limited to, nitrogen or carbon dioxide, sometimes introduced into a refrigerated cargo box for transport of perishable produce.

The refrigerant compression device 32 may comprise a single-stage or multiple-stage compressor such as, for example, a reciprocating compressor or a scroll compressor. The compression device 32 has a compression mechanism (not shown) driven by an electric motor 50. In an embodiment, the motor 50 may be disposed internally within the compressor with a drive shaft interconnected with a shaft of the compression mechanism, all sealed within a common housing of the compression device 32.

The transport refrigeration system 200 also includes a controller 30 configured for controlling operation of the transport refrigeration system 200 including, but not limited to, operation of various components of the refrigerant unit 22 to provide and maintain a desired thermal environment within the refrigerated cargo space 119. The controller 30 may also be able to selectively operate the prime mover 26, typically through an electronic engine controller 54 operatively associated with the prime mover 26. The controller 30 may also be able to selectively operate the battery system 190. The controller 30 may be an electronic controller including a processor and an associated memory comprising computer-executable instructions that, when executed by the processor, cause the processor to perform various operations. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

The transport refrigeration unit 22 has a plurality of power demand loads, including, but not limited to, the compression device drive motor 50, the drive motor 42 for the fan 40 associated with the refrigerant heat rejection heat exchanger 34, and the drive motor 46 for the fan 44 associated with the refrigerant heat absorption heat exchanger 38. In the depicted embodiment, the heater 48 also constitutes a power demand load. The electric resistance heater 48 may be selectively operated by the controller 30 whenever a control temperature within the temperature controlled cargo box drops below a preset lower temperature limit, which may occur in a cold ambient environment. In such an event the controller 30 would activate the heater 48 to heat air circulated over the heater 48 by the fan(s) 44 associated with the refrigerant heat absorption heat exchanger 38. The heater 48 may also be used to de-ice the return air intake 136.

The prime mover 26, which comprises an on-board fossil-fuel engine, most commonly a diesel engine, drives the electric generation device 24 that generates electrical power. The drive shaft of the engine drives the shaft of the electric generation device 24. In an electrically powered embodiment of the refrigeration unit 20, the electric generation device 24 may comprise a single on-board, engine driven AC generator configured to generate alternating current (AC) power including at least one AC voltage at one or more frequencies. In an embodiment, the electric generation device 24 may, for example, be a permanent magnet AC generator or a synchronous AC generator. In another embodiment, the electric generation device 24 may comprise a single on-board, engine driven DC generator configured to generate direct current (DC) power at at least one voltage. Some electric generation devices may have internal voltage regulators while other electric generation devices do not. As each of the fan motors 42, 46 and the compression device drive motor 50 may be an AC motor or a DC motor, it is to be understood that various power converters 52, such as AC to DC rectifiers, DC to AC inverters, AC to AC voltage/frequency converters, and DC to DC voltage converters, may be employed in connection with the electric generation device 24 as appropriate. The transport refrigeration system 200 may include a voltage sensor 28 to sense the voltage of the electric generation device 24.

In the illustrated embodiment, the transport refrigeration system 200 includes a battery system 190, as seen in FIG. 1. The battery system 190 is configured to power the transport refrigeration unit 22. The battery system 190 may provide supplemental power in addition to the power generated by the prime mover 26 or the battery system 190 may be large enough to power the entire transport refrigeration unit 22 when the prime mover 26 is deactivated. The battery system 190 may comprise at least one of a lithium ion battery, a nickel-metal hydride battery, an alkaline battery, a nickel-hydrogen battery, and a lead-acid battery. The battery system 190 may include a voltage regulator 192 to sense and/or regulate the voltage of the battery system 190.

It is understood that while transport refrigeration system 200 illustrated in FIGS. 1 and 2 is powered by a combination battery system 190 and prime mover 26, the embodiments disclosed herein are also applicable to transport refrigeration systems 200 powered solely by the prime mover 26 or the battery system 190.

In the illustrated embodiment, the battery system 190 is integrally attached to the refrigerated transport container 106 of the transport refrigeration system 200 and located proximate a bottom wall 110 of the refrigerated transport container 106. The battery system 190 may be integrally attached to the refrigerated transport container 106 at various other locations, including but not limited to proximate the top wall 108, proximate the rear wall 116, proximate the front wall 114, or within the refrigerated cargo space 119. In another embodiment, the battery system 190 is integrally attached to a drop deck 180 configured to carry the refrigerated transport container 106 of the transport refrigeration system 200. The drop deck 180 is releasably connected to the refrigerated transport container 106. In another embodiment, the battery system 190 is integrally attached to a tractor 102 configured to pull a refrigerated transport container 106 of the transport refrigeration system 200. The tractor 102 being releasably connected to the refrigerated transport container 106.

Airflow is circulated into and through the refrigerated cargo space 119 of the refrigerated transport container 106 by means of the transport refrigeration unit 22. A return airflow 134 flows into the transport refrigeration unit 22 from the refrigerated cargo space 119 through the refrigeration unit return air intake 136, and across the refrigerant heat absorption heat exchanger 38 via the fan 44, thus conditioning the return airflow 134 to a selected or predetermined temperature. The conditioned return airflow 134, now referred to as supply airflow 138, is supplied into the refrigerated cargo space 119 of the refrigerated transport container 106 through the refrigeration unit outlet 140, which in some embodiments is located near the bottom wall 110 of the transport container 106. Heat 135 is removed from the refrigerant heat rejection heat exchanger 34 through the heat outlet 142. The transport refrigeration unit 22 may contain an external air inlet 144, as shown in FIG. 2, to aid in the removal of heat 135 from the refrigerant heat rejection heat exchanger 34 by pulling in external air 137. The supply airflow 138 cools the perishable goods 118 in the refrigerated cargo space 119 of the refrigerated transport container 106. It is to be appreciated that the transport refrigeration unit 22 can further be operated in reverse to warm the transport container 106 when, for example, the outside temperature is very low. In the illustrated embodiment, the return air intake 136, the refrigeration unit outlet 140, the heat outlet 142, and the external air inlet 144 are configured as grilles to help prevent foreign objects from entering the transport refrigeration unit 22.

In the illustrated embodiment, the transport refrigeration system 200 may also include a communication device 175 operably connected to the controller 30, as seen in FIG 1. The communication device 175 is capable of two-way wireless communication between a sensor communication module 320 of a sensor system 300 located within the refrigerated cargo space 119 and a communication module 450 of a user device 400. In an embodiment, the wireless communication may be Bluetooth or any other wireless communication method known to one of skill in the art.

The sensor system 300 includes one or more sensors 310 configured to detect whether the refrigerated cargo space 119 is empty or free of perishable goods 118. If the refrigerated cargo space 119 is empty or free of perishable goods 118 then the transport refrigeration unit 22 may be shut off or returned to an atmospheric temperature to conserve fuel or electricity. The atmospheric temperature may be a temperature outside of the transport container 106. Shutting off the transport refrigeration unit 22 or returning the transportation refrigeration unit 22 and the transport container 106 back to atmospheric temperature may include deactivating or adjusting operation of the compression device 32. The transport refrigeration unit 22 may be shut off or returned to the atmospheric temperature automatically or may be commanded to be shut off or returned to the atmospheric temperature via a user device 400. The sensor 310 may be attached to the top wall 108 or any wall of the transport container 106. The sensor 310 may be a thermal imaging camera, radio frequency 3D imaging sensor, radio frequency scanner, infrared camera, a night vision camera, an image recognition camera, a video camera, Light Detection and Ranging (LIDAR) camera, or any sensor system known to one of skill in the art. The sensor 310 may be configured to detect perishable goods using at least one of thermal imaging, radio frequency 3D imaging, radio frequency scanning, infrared imaging, a night vision imaging, visual recognition, video analysis, LIDAR, or any detection method known to one of skill in the art.

The sensor system 300 and/or each sensor 310 may be capable of edge analysis to capture data and analyze the data prior to transmission. Alternatively, the analysis of the data may be performed remotely.

The sensor system 300 or each sensor 310 may include a processor 330 and an associated memory 340 comprising computer-executable instructions (i.e., computer program product) that, when executed by the processor 330, cause the processor 330 to perform various operations. The processor 330 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 340 may be but is not limited to a random access memory (RAM), read only memory (ROM), or other electronic, optical, magnetic or any other computer readable medium.

The sensor 310 may be configured to see through shipping containers or boxes to determine whether perishable goods 118 are present in the transport container 106. The sensor 310 may be configured to see an entirety (i.e., all) of the refrigerated cargo space 119. The sensor 310 may be capable of 360 degree vision to see an entirety of the refrigerated cargo space 119, thus if the sensor 310 is placed in the refrigerated cargo space 119 the sensor 310 can see 360 degrees around the sensor 310. The sensor 310 may be stationary or configured to rotate to achieve the 360 degree vision. In an embodiment, the sensor 310 can achieve 360 degree night vision. Alternatively, the sensor system 300 may utilize an array of sensors 310, such that an entirety of the refrigerated cargo space 119 is visible by the sensor system 300 using the array of sensors 310. In an embodiment, the sensors 310 are organized in an array to see an entirety of the refrigerated cargo space 119.

The sensor system 300 includes a sensor communication module 320. The sensor communication module 320 is capable of two-way wireless communication with the communication device 175. The sensor communication module 320 is capable of two-way wired and/or wireless communication with the communication module 450 of the user device 400. In an embodiment, the wireless communication may be Bluetooth, or any other wireless communication method known to one of skill in the art.

The sensor system 300 is configured to communicate to the controller 30 whether the refrigerated cargo space 119 is empty by transmitting a message 370 from the sensor communication module 320 to the communication device 175. The controller 30 may be configured to automatically shut off the transport refrigeration unit 22 or return the transport refrigeration unit 22 back to the atmospheric temperature in response to the message 370 indicating that the refrigerated cargo space 119 is empty.

The sensor system 300 is configured to communicate to the user device 400 whether the refrigerated cargo space 119 is empty by transmitting a message 370 from the sensor communication module 320 to the communication module 450 of the user device 400.

The user device 400 may be a driver dashboard in the cab 104, a cellular phone, tablet, laptop, smartwatch, desktop computer or any similar device known to one of skill in the art. The user device 400 includes a display device configured to display the message 370 from the sensor system 300. The message 370 may state that the refrigerated cargo space 119 is empty. The message 370 may also state that the refrigerated cargo space 119 is empty, please shut of the refrigeration unit to 22 to conserve fuel or electricity.

The user device 400 includes an input device 420 configured to receive a manual input from an operator (e.g., human being) of the user device 400. The input device 420 may be a keyboard, a touch screen, a joystick, a knob, a touchpad, one or more physical buttons, a microphone configured to receive a voice command, a camera or sensor configured to receive a gesture command, or any similar input device known to one of skill in the art. The input device 420 may be configured to receive input from an autonomous device. The autonomous device may be a robot or any other autonomous device known to one of skill in the art. The input device 420 may allow the operator of the user device 400 to enter a command 480 to activate or deactivate the transport refrigeration unit 22 via a manual input to the input device 420. The command 480 may be transmitted from the user device 400 to the communication device 175 via a communication module 450 of the user device 400. The communication module 450 is capable of two-way wireless communication with the communication device 175. The communication module 450 is capable of two-way wired and/or wireless communication with the sensor system 300. In an embodiment, the wireless communication may be Bluetooth, or any other wireless communication method known to one of skill in the art.

The communication device 175 may receive a command 480 from an operator via the user device 400. The command 480 may instruct the controller 30 to deactivate the transport refrigeration unit 22 or activate the transport refrigeration unit 22. The controller 30 is configured to deactivate the transport refrigeration unit 22 based on the command. An operator of the user device 400 may want to send the command 480 to instruct the controller 30 to deactivate the transport refrigeration unit 22 if there are no perishable goods 118 located within the refrigerated cargo space 119.

The controller 30 may be configured to automatically deactivate the transport refrigeration unit 22 upon receiving the message 370 from the sensor system 300 that the refrigerated cargo space is empty or the controller 30 may wait to deactivate the transport refrigeration unit 22 until a command 480 is received from the user device.

In the illustrations of FIGS. 1 and 2, the refrigerated cargo space only includes one compartment 121, however it is understood that embodiments disclosed herein may be applicable to refrigerated cargo spaces 119 with multiple compartments 121 each having separate refrigerated environments that are individually controlled by the transport refrigeration unit 22. If the refrigerated cargo space 119 is broken up into one or more compartments 121, there may be a sensor 310 located in each compartment or the sensor 310 may be capable of seeing through walls separating compartments 121 to detect whether there are perishable goods 118 in each compartment 121. In one embodiment, the sensor 310 may be a radio frequency 3D imaging camera capable of seeing through walls separating compartment 121. Each compartment 121 may be deactivated individually depending on whether the sensor 310 detects perishable goods in the compartments 121.

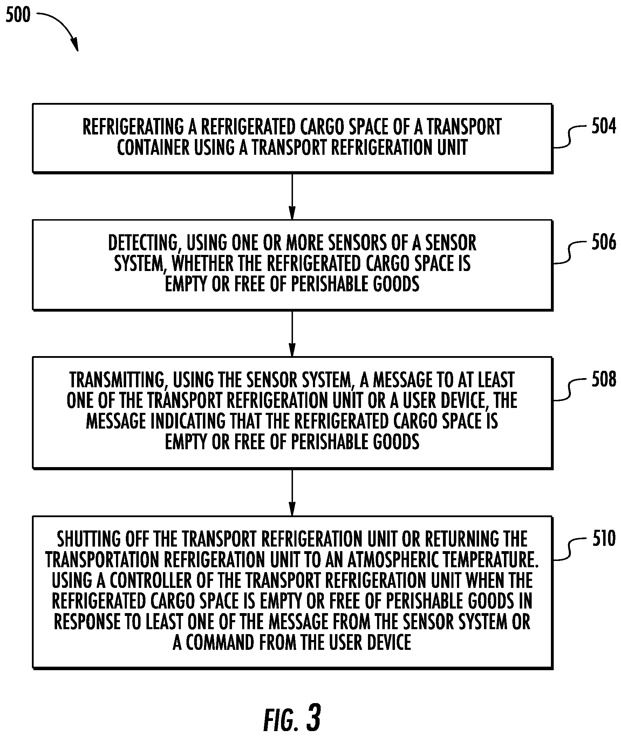

Referring now also to FIG. 3, which shows a flow diagram illustrating a method 500 of operating a transport refrigeration system 200 of FIGS. 1 and 2.

A block 504, refrigerated cargo space 119 of a transport container 106 is refrigerated using a transport refrigeration unit 22.

At block 506, one or more sensors 310 of a sensor system 300 detects whether the refrigerated cargo space 119 is empty or free of perishable goods 118.

At block 508, the sensor system transmits a message 370 to at least one of the transport refrigeration unit 22 or a user device 400. The message 370 indicates that the refrigerated cargo space 119 is empty or free of perishable goods 118.

At block 510, the transport refrigeration unit 22 is shut off or returned to an atmospheric temperature using a controller 30 of the transport refrigeration unit 22 when the refrigerated cargo space 119 is empty or free of perishable goods 118 in response to least one of the message 370 from the sensor system 300 or a command 480 from the user device 400. In one embodiment, the transport refrigeration unit 22 is configured to shut off or return to the atmospheric temperature automatically in response to the message 370 from the sensor system 300. In another embodiment, the transport refrigeration unit 22 is configured to shut off or return to the atmospheric temperature automatically in response to the command 480 from the user device 400. The command 480 is generated via an input device 420 of the user device 400.

The method 500 may further include that the input device 420 of the user device 400 receives a manual input from an operator of the user device 400 and then the command 480 is generated by the user device 400 based on the manual input. In an embodiment, the transport refrigeration unit 22 is configured to shut off or return to the atmospheric temperature automatically in response to the command 480 from the user device 400.

While the above description has described the flow process of FIG. 3 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code (e.g., computer program product) containing instructions embodied in tangible media, such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or exemplary embodiments, it will be understood by those skilled in the art that various changes may be made and equivalents may be substituted for elements thereof without departing from the scope of the present invention, as defined in the appended claims. In addition, many modifications may be made to adapt a particular situation or material to the teachings of the present invention without departing from the scope thereof. Therefore, it is intended that the present invention not be limited to the particular embodiment disclosed as a best mode contemplated for carrying out this present invention, but that the present invention will include all embodiments falling within the scope of the claims.

## Claims

1. A transport refrigeration system (200) comprising:
a transport refrigeration unit (22) configured to refrigerate a refrigerated cargo space (119) within a transport container (106); and
a sensor system (300) comprising one or more sensors (310) configured to detect whether the refrigerated cargo space (119) is empty or free of perishable goods (118), wherein the sensor system (300) is configured to transmit a message (370) to at least one of the transport refrigeration unit (22) or a user device (400), the message (370) indicating that the refrigerated cargo space (119) is empty or free of perishable goods (118), and
wherein the transport refrigeration unit (22) is configured to shut off or return to an atmospheric temperature when the refrigerated cargo space (119) is empty or free of perishable goods (118) in response to least one of the message (370) from the sensor system (300) or a command (480) from the user device (400).

2. The transport refrigeration system (200) of claim 1, wherein the transport refrigeration unit (22) is configured to shut off or return to the atmospheric temperature automatically in response to the message (370) from the sensor system (300).

3. The transport refrigeration system (200) of claim 1 or 2, wherein the transport refrigeration unit (22) is configured to shut off or return to the atmospheric temperature automatically in response to the command (480) from the user device (400), and wherein the command (480) is generated via an input device (420) of the user device (400).

4. The transport refrigeration system (200) of claim 1 or 2, wherein:
the user device (400) comprises an input device (420) configured to receive a manual input from an operator of the user device (400), wherein the command (480) is generated based on the manual input; and
the transport refrigeration unit (22) is configured to shut off or return to the atmospheric temperature automatically in response to the command (480) from the user device (400).

5. The transport refrigeration system (200) of any preceding claim, wherein the one or more sensors (310) are capable of 360 degree vision or 360 degree night vision to see an entirety of the refrigerated cargo space (119).

6. The transport refrigeration system (200) of any preceding claim, wherein the one or more sensors (310) are organized in an array to see an entirety of the refrigerated cargo space (119).

7. The transport refrigeration system (200) of any preceding claim, wherein the one or more sensors (310) includes a thermal imaging camera, radio frequency 3D imaging sensor, radio frequency scanner, infrared camera, a night vision camera, an image recognition camera, a video camera, or a Light Detection and Ranging (LIDAR) camera.

8. The transport refrigeration system (200) of any preceding claim, wherein the one or more sensors (310) are configured to see through shipping containers or boxes to determine whether perishable goods (118) are present in the transport container (106).

9. The transport refrigeration system (200) of any preceding claim, wherein the transport container (106) includes one or more compartments (121) and wherein each of the one or more compartments (121) includes at least one of the one or more sensors (310).

10. The transport refrigeration system (200) of any preceding claim, wherein the transport container (106) includes one or more compartments (121) and wherein each of the one or more sensors (310) are capable of seeing through walls separating compartments (121) to detect whether there are perishable goods (118) in each of the one or more compartments (121).

11. A method (500) of operating a transport refrigeration system (200), the method (200) comprising:
refrigerating (504) a refrigerated cargo space (119) of a transport container (106) using a transport refrigeration unit (22);
detecting (506), using one or more sensors (310) of a sensor system (300), whether the refrigerated cargo space (119) is empty or free of perishable goods (118);
transmitting (508), using the sensor system (300), a message (370) to at least one of the transport refrigeration unit (22) or a user device (400), the message (370) indicating that the refrigerated cargo space (119) is empty or free of perishable goods (118); and
shutting off (510) the transport refrigeration unit (22) or returning the transport refrigeration unit (22) to an atmospheric temperature using a controller (30) of the transport refrigeration unit (22) when the refrigerated cargo space (119) is empty or free of perishable goods (118) in response to least one of the message (370) from the sensor system (300) or a command (480) from the user device (400).

12. The method (500) of claim 11, wherein the transport refrigeration unit (22) is configured to shut off or return to the atmospheric temperature automatically in response to the message (370) from the sensor system (300).

13. The method (500) of claim 11 or 12, wherein the transport refrigeration unit (22) is configured to shut off or return to the atmospheric temperature automatically in response to the command (480) from the user device (400), and wherein the command (480) is generated via an input device (420) of the user device (400).

14. The method (500) of claim 11 or 12, further comprising:
receiving, using an input device (420) of the user device (400), a manual input from an operator of the user device (400), wherein the command (480) is generated based on the manual input, and
wherein the transport refrigeration unit (22) is configured to shut off or return to the atmospheric temperature automatically in response to the command (480) from the user device (400).

15. The method (500) of any of claims 11 to 14, wherein the transport refrigeration system (200) is the transport refrigeration system (200) according to any of claims 1 to 10.
